# EUROPÄISCHE PATENTANMELDUNG

(11) **EP 4 184 545 A1**
(43) Veröffentlichungstag der Anmeldung: **24.05.2023**
(21) Anmeldenummer: 22193051.4
(22) Anmeldetag: 31.08.2022
(51) Int. Cl.: H01H 50/24, H01H 37/54, H01H 37/08, H01H 9/16, A47J 27/21, H01H 50/64, H01H 37/58

(54) **THERMISCHE SCHALTEINRICHTUNG SOWIE HEIZEINRICHTUNG**

(30) Priorität: 17.11.2021 DE 202021106279 U
(71) Anmelder: Inter Control Hermann Köhler Elektrik GmbH & Co. KG, 90411 Nürnberg (DE)
(72) Erfinder: Pössnicker, Peter, 90562 Heroldsberg (DE); Klapetek, Marian, 97714 Oerlenbach (DE); Freiherr von Richthofen, Daniel, 90491 Nürnberg (DE)
(74) Vertreter: Stippl Patentanwälte

(57) **Zusammenfassung**

Thermische Schalteinrichtung (1), insbesondere Temperaturregler, Temperaturbegrenzer oder Temperatursicherung, umfassend
ein Gehäuse (2),
einen ersten, vorzugweise fixen Kontakt (13),
einen zweiten, vorzugsweise beweglichen Kontakt (14),
einen temperatursensitiven Aktor, welcher dazu dient, beim Übersteigen einer bestimmten Temperatur den ersten (13) und den zweiten Kontakt (14) voneinander zu trennen,
**dadurch gekennzeichnet, dass**
ein elektromagnetisches Element vorgesehen ist, welches ebenfalls dazu dient, die Kontakte (13, 14) voneinander zu trennen und/oder miteinander zu verbinden und/oder die Kontaktstellung der Kontakte (13, 14) zu bestimmen.

## Beschreibung

Die vorliegende Erfindung betrifft eine thermische Schalteinrichtung, insbesondere einen Temperaturregler, einen Temperaturbegrenzer oder eine Temperatursicherung nach dem Oberbegriff des Anspruchs 1. Ferner betrifft die vorliegende Erfindung eine Heizeinrichtung mit einer entsprechenden thermischen Schalteinrichtung.

### Technologischer Hintergrund

Thermische Schalteinrichtungen der nachstehend beschriebenen Art dienen dazu, bei Erreichen einer Schalttemperatur einen Stromkreis einer Heizeinrichtung zu unterbrechen. Hierzu werden thermische Schalteinrichtungen in Wärmekontakt zu einer Heizeinrichtung positioniert. Zur Gewährleistung der Schaltfunktion umfasst die thermische Schalteinrichtung ein aktiv auf Temperatur ansprechendes Bauteil. In der Regel handelt es sich hierbei um eine bistabile Bimetallsprungscheibe, die eine spezifische Schalttemperatur bzw. Sprungtemperatur besitzt. Es kann sich jedoch auch um ein Schmelzelement, z. B. eine Schmelzpille handeln. In diesem Fall liegt eine Temperatursicherung vor. Bei der Heizeinrichtung handelt es sich insbesondere um in Küchengeräten untergebrachte Heizeinrichtungen zum Aufheizen von Flüssigkeiten wie z. B. Kaffeemaschinen, Wasserkocher usw.

Die thermische Schalteinrichtung wird über zwei Anschlusskontakte in den Stromkreis der Heizeinrichtung implementiert. Die beiden Anschlusskontakte bilden in Verbindung mit einem Bewegungskontakt und einem Festkontakt eine Kontaktstrecke. Der Kontaktschluss zwischen Festkontakt und Bewegungskontakt wird durch die Federspannung des Bewegungskontakts hergestellt. Die Kontaktstrecke wird beim Erreichen der Sprungtemperatur des aktiv auf Temperatur ansprechenden Bauteils geöffnet. Die Bewegung des aktiv auf Temperatur ansprechenden Bauteils wird hierbei über ein Übertragungselement, welches mit dem Bewegungskontakt in Verbindung steht, auf den Bewegungskontakt übertragen, wodurch die Kontaktstrecke geöffnet und der Stromkreis unterbrochen wird.

Materialermüdung, nachlassende Federkraft oder ein nachlassender Schließdruck der Kontakte sowie Verschleiß an den Kontakten führen zu einer Verschlechterung der Schalteigenschaften der thermischen Schalteinrichtung. Dadurch wird die Lebenszeit des jeweiligen Haushaltsgerätes verringert. Deshalb wird an eine thermische Schalteinrichtung die Anforderung gestellt, dass sich das Schaltverhalten, auch über längere Zeiträume, möglichst nicht verändert.

Weiterhin steigen die Anforderungen bezüglich der Funktionalität, der Zuverlässigkeit sowie der Konnektivität zu anderen Steuerungselementen mit der zunehmenden Komplexität von Geräten mit solchen Heizelementen stetig.

### Druckschriftlicher Stand der Technik

Eine thermische Schalteinrichtung zeigt die DE 198 01 251 C2. Ein Bewegungskontakt befindet sich hierbei oberhalb des Festkontaktes. Eine Bimetallsprungscheibe ist unterhalb einer bistabilen Metallscheibe angeordnet. Ferner wird als Übertragungselement ein flaschenartig ausgestaltetes Stellglied eingesetzt. Bei Erreichen der Sprungtemperatur wird die Bewegung der Bimetallsprungscheibe über die Metallscheibe und das Übertragungselement auf den Bewegungskontakt übertragen. Anschließend kann die bistabile Metallscheibe über einen Spreizelementring mit Druck beaufschlagt werden, um diese in ihre Ausganglage zurückzuschalten. Die Federkraft des Bewegungskontakts drückt letzteren nach unten in Schließstellung auf den Festkontakt. Hierdurch besteht die Gefahr, dass es durch die stetige Krafteinwirkung zur allmählichen Materialermüdung des Bewegungskontaktes kommt, wodurch die Nutzungsdauer sowie die Sicherheit der thermischen Schalteinrichtung allmählich herabgesetzt werden.

Eine ähnliche thermische Schalteinrichtung offenbart die DE 197 06 316 A1. Der Bewegungskontakt ist, wie auch in der DE 198 01 251 C2, oberhalb des Festkontakts gelagert, wodurch sich entsprechende Probleme in Bezug auf Haltbarkeit und Sicherheit ergeben.

### Aufgabe der vorliegenden Erfindung

Der vorliegenden Erfindung liegt die Aufgabe zugrunde, eine verbesserte thermische Schalteinrichtung sowie eine Heizeinrichtung mit einer verbesserten thermischen Schalteinrichtung zur Verfügung zu stellen.

### Lösung der Aufgabe

Die vorstehende Aufgabe wird durch die gesamte Lehre des Anspruchs 1 sowie des Anspruchs 24 gelöst. Zweckmäßige Ausgestaltungen der Erfindung sind in den Unteransprüchen beansprucht.

Erfindungsgemäß weist die thermische Schalteinrichtung, welche insbesondere als Temperaturregler, Temperaturbegrenzer oder Temperatursicherung eingesetzt wird, ein Gehäuse, einen ersten, vorzugweise fixen Kontakt, einen zweiten, vorzugsweise beweglichen Kontakt, einen temperatursensitiven Aktor, welcher dazu dient, beim Übersteigen einer bestimmten Temperatur den ersten und den zweiten Kontakt voneinander zu trennen und ein elektromagnetisches Element, welches ebenfalls dazu dient, die Kontakte voneinander zu trennen und/oder miteinander zu verbinden und/oder die Kontaktstellung der Kontakte zu bestimmen, auf. Die Integration eines elektromagnetischen Elements ermöglicht gegenüber den bekannten Ausführungen damit eine Vielzahl zusätzlicher Funktionalitäten, wobei die Vorteile und die Sicherheit mechanisch schaltender, temperatursensitiver Elemente beibehalten werden. Insbesondere können Einschaltzeiten vor und nach Erreichen der Abschalttemperatur variabel gesteuert bzw. geregelt werden, sodass Vor- und Nachheizphasen aufgabenspezifisch gestellt werden können.

Vorzugweise können der temperatursensitive Aktor und das elektromagnetische Element unmittelbar gegenseitig aufeinander in der Art wirken, dass die beiden Kontakte voneinander getrennt oder verbunden werden. In vorteilhafter Weise gibt es auf diese Weise nur eine einzige Kontaktstelle, wodurch sich unter anderem eine sehr kompakte Bauweise realisieren lässt und das Risiko des Verschleißes und/oder Versagens zusätzlicher Kontaktstellen entfällt.

Zweckmäßigerweise kann der temperatursensitive Aktor gegenüber dem elektromagnetischen Element in der Auslösung der Schaltfunktion priorisiert sein. Folglich kann mithilfe des elektromagnetischen Elements der Stromkreis des zu steuernden bzw. zu regelnden Stromkreises (z. B. einem Heizelement) unterhalb einer bestimmten Aktivierungstemperatur des temperatursensitiven Aktors (der Abschalttemperatur der thermischen Schalteinrichtung), ein Verbinden und Trennen der Kontakte bewirkt werden. Der temperatursensitive Aktor wirkt unterhalb dieser Temperatur nicht auf die Kontakte. Oberhalb dieser Temperatur trennt der temperatursensitive Aktor die Kontakte prioritär, d. h. unabhängig von der Stellung des elektromagnetischen Elements. Ein großer Vorteil dieser Anordnung besteht darin, dass ein zuverlässiges Abschalten erfolgt, unabhängig davon, ob das elektromagnetische Element bestromt wird, d. h. ein sicheres Abschalten erfolgt auch bei defekter Steuerung und/oder elektromagnetischem Element. Die Abschaltemperatur kann zweckmäßigerweise zwischen 130 °C und 150 °C liegen.

Ferner kann das elektromagnetische Element eine Spule aufweisen. Die Spule kann als Erregerspule genutzt werden, um durch Anlegen einer elektrischen Spannung ein Magnetfeld zu induzieren und/oder als induktiver Sensor, um eine Lageänderung (und/oder ferromagnetisch Eigenschaftsänderung), relativ zur Spule angeordneter, leitfähiger und/oder ferromagnetischer Elemente mithilfe der dadurch verursachten Änderung der Induktivität zu erfassen.

Des Weiteren kann das elektromagnetische Element einen Spulenkern, ein Jochblech und/oder einen beweglichen Anker aufweisen. Diese lassen sich in einer thermischen Schalteinrichtung in einfacher Weise in der Montage komplettieren. Ferner bestehen diese insbesondere aus einem ferromagnetischen Material. Durch einen an der Spule angelegten Strom kann eine Kraft auf den beweglich gelagerten Anker erzeugt werden. Das insbesondere ferromagnetische Jochblech kann diese Kraft verstärken und dient als Auflager für den beweglichen Anker. Über die Änderung der Induktivität kann bei Bedarf weiterhin mithilfe der Spule die Stellung des Ankers bestimmt werden.

In vorteilhafter Weise können der temperatursensitive Aktor und/oder das elektromagnetische Element gemeinsam auf ein bewegliches Schaltelement, das vorzugsweise nicht elektrisch leitfähig ist, wirken, wobei in Abhängigkeit der Position des beweglichen Schaltelements die Schaltstellung der Kontakte festgelegt wird. Das bewegliche Schaltelement ist dazu vorgesehen, eine Bewegung auf den beweglichen Kontakt zu übertragen. Vorzugsweise ist der Anker des elektromagnetischen Elements unmittelbar mit dem Schaltelement verbunden.

Dadurch, dass das bewegliche Schaltelement im Gehäuse kippbar, vorzugsweise auf dem Jochblech aufliegend kippbar, gelagert ist, wird erreicht, dass beide Teile als einfach zu fertigende Teile ausgestaltet werden können. Das Jochblech kann dabei vorzugsweise als Blechteil ausgeführt sein.

Weiterhin kann das Jochblech als Winkelstück mit einem horizontalen Wandstück und einem vertikalen Wandstück ausgebildet sein und das bewegliche Schaltelement auf dem vertikalen Wandstück kippbar gelagert sein. Durch die kippbare Lagerung und Gestaltung des Schaltelements, kann dieser als Kraftwandler in Form eines auf dem vertikalen Wandstück aufliegenden Hebels ausgeführt werden. Vorzugsweise wirkt dabei auf den kontaktabgewandten Hebelarm des Schaltelements das elektromagnetische Element und/oder der temperatursensitive Aktor. Das so erzeugte Drehmoment (bzw. die daraus resultierende Stellkraft) wird über den kontaktzugewandten Hebelarm auf den beweglichen Kontakt übertragen.

Dadurch, dass das bewegliche Schaltelement vorzugsweise von unten an dem beweglichen Kontakt angreift, kann das von der Federkraft einer Schaltfeder des beweglichen Kontaktes aufgebrachte Drehmoment über den kontaktzugewandten Hebelarm des Schaltelements auf das kippbare Schaltelement wirken. Dieses wirkt dem, durch das elektromagnetische Element begründeten Drehmoment entgegen, wobei der Anker (der mit dem Schaltelement verbunden ist) dadurch bei stromloser Spule offengehalten werden kann. Um die priorisierte Schaltung des temperatursensitiven Aktors zu gewährleisten, kann das von dem temperatursensitiven Aktor begründete Drehmoment größer sein als das von dem elektromagnetischen Element begründete Drehmoment abzüglich des durch die Schaltfeder begründeten Drehmoments.

Ferner kann der temperatursensitive Aktor ein temperatursensitives Element, vorzugsweise in Form einer bistabilen Bimetallsprungscheibe aufweisen, welches mit einem Übertragungselement zusammenwirkt. Das Übertragungselement ist dabei vorzugsweise mit der Bimetallsprungscheibe derart verbunden, dass es beim Erreichen der Schalttemperatur die Bewegung (Verformung) der Bimetallsprungscheibe auf das Schaltelement überträgt.

Durch eine vorteilhafte Gestaltung des Spulenkerns sowie das Jochblechs mit je einer Durchgangsöffnung für das Übertragungselement lässt sich eine besonders kompakte Bauform realisieren.

Wenn das Übertragungselementes aus einem ferromagnetischen Material besteht, kann in vorteilhafter Weise über die Änderung der Induktivität des elektromagnetischen Elements die Schaltstellung des temperatursensitiven Aktors ermittelt werden. Das elektromagnetische Element und das Übertragungselement können hierfür derart gestaltet sein, dass sich drei unterschiedliche Induktivitäten ergeben, und zwar insbesondere für: (a) geschlossenen Anker, (b) geöffneten Anker und deaktivierten temperatursensitiven Aktor sowie (c) geöffneten Anker und aktivierten temperatursensitiven Aktor. Damit können alle möglichen Schaltzustände eindeutig bestimmt werden.

Des Weiteren können die Kontakte elektrisch mit einer, im oder am Gehäuse positionierten Elektronik verbunden sein, wodurch in vorteilhafter Weise weitere Informationen über den Schaltzustand sowie den an den Kontakten angeschlossenen Stromkreis gewonnen werden können.

Dadurch, dass das elektromagnetische Element mit der Elektronik elektrisch verbunden sein kann, kann des elektromagnetische Element in seiner Wirkweise als Aktor bzw. Sensor gesteuert und/oder geregelt werden. Insbesondere können in der Wirkweise als Sensor die Schaltzustände des elektromagnetischen Elements und/oder temperatursensitiven Aktors erfasst werden.

Weiterhin kann die Stromversorgung des elektromagnetischen Aktors und/oder der Elektronik aus der an den Kontakten anliegenden Spannung abgeleitet werden. Dazu kann es zweckmäßig sein, dass die an den Kontakten anliegende Spannung gewandelt wird, vorzugsweise durch einen sog. Buck-Converter. Auf eine zusätzliche Energiequelle kann so in vorteilhafter Weise verzichtet werden.

Vorzugsweise ist an der Unterseite des Gehäuses der thermische Schalteinrichtung eine thermisch leitfähige Grundplatte vorgesehen, um die Temperatur der zu überwachenden/steuernden/regelnden Heizeinrichtung auf den temperatursensitiven Aktor zu übertragen. Dies bewirkt eine schnelle thermische Übertragung bzw. eine geringe thermische Trägheit sowie geringe Rückwirkung auf die Heizeinrichtung.

In einer weiteren vorteilhaften (auch alternativen Ausgestaltung zur Verwendung einer Bimetallsprungscheibe) kann der temperatursensitive Aktor dadurch realisiert werden, dass der Anker und/oder das Jochblech und/oder der Spulenkern ein ferromagnetisches Material aufweisen bzw. aufweist, welches oberhalb einer vorgegebenen Schalttemperatur seine ferromagnetische Eigenschaft verliert. Hierzu kann ein Werkstoff verwendet werden, dessen Curie-Temperatur (vorzugsweise einer Curie-Temperatur zwischen 140 °C und 150 °C) der vorgegebenen Schalttemperatur entspricht. Dadurch wird die Wirkweise des elektromagnetischen Elements als Aktor oberhalb dieser Temperatur außer Kraft gesetzt, wodurch eine automatische Trennung der Kontakte bewirkt wird. Die Funktionsweise des elektromagnetischen Elements als Sensor kann hingegen erhalten bleiben, womit das Überschreiten der Curie-Temperatur durch die Änderung der Induktivität des elektromagnetischen Elements erfasst werden kann. Diese thermische Schaltfunktion kann einen weiteren temperatursensitiven Aktor ersetzen, wodurch sich eine besonders einfache Bauweise ergibt. Alternativ kann diese thermische Schaltfunktion bei Bedarf auch redundant zu einem weiteren temperatursensitiven Aktor vorhanden sein, wodurch eine zusätzliche Sicherheit bezüglich der Abschaltung gewährleistet wird.

Zweckmäßigerweise kann die Elektronik einen Mikrocontroller und/oder einen Spannungswandler, insbesondere einen Buck-converter und/oder einen Akkumulator und/oder einen Temperatursensor und/oder einen Feuchtesensor und/oder einen Bewegungssensor und/oder einen AD/DA-Wandlern zur Überwachung und/oder Regelung und/oder Steuerung der Schaltungen des elektromagnetischen Aktors aufweisen. Durch den Spannungswandler kann die Stromversorgung der Elektronik und/oder des elektromagnetischen Elements sowie die Aufladung des Akkumulators erfolgen. Zusätzliche Temperatursensor und/oder einen Feuchtesensor und/oder einen Bewegungssensor können weiter Informationen über die Betriebsumgebung und/oder sonstiger zu regelnder Element liefern.

Die Erfindung erlaubt es, folgende Daten zu erfassen: die Betriebsdauer der thermische Schalteinrichtung, und/oder die Dauer der Schaltzeiten, insbesondere Öffnungs- und/oder Schließzeiten, der Kontakte, und/oder die Schließdauer und/oder Öffnungsdauer beim Schließen bzw. Öffnen der Kontakte, und/oder die Anzahl der Schaltvorgänge der Kontakte und/oder die Zuordnung der Schaltvorgänge in Bezug auf die Auslösung durch den temperatursensitiven Aktor und/oder das elektromagnetische Element, und/oder die an den Kontakten anliegende Spannung, und/oder der Widerstand zwischen den Kontakten, und/oder der über die Kontakte fließenden Strom, und/oder der Zustand und/oder der Verschleiß der Kontakte, und/oder der Zeitpunkt der Schaltvorgänge der Kontakte. Insbesondere der Zustand der Kontakte kann vorzugsweise über den Widerstand und/oder die Schließdauer und/oder Öffnungsdauer beim Schließen bzw. Öffnen und/oder die Dauer der Schaltzeiten und/oder die Anzahl der Schaltvorgänge abgeleitet werden.

Die erfassten Daten können analysiert und/oder mit empirischen Daten verglichen werden, um daraus Informationen über den Zustand und/oder den Verschleiß der thermischen Schalteinrichtung und/oder der Heizeinrichtung abzuleiten.

Zweckmäßigerweise kann die Elektronik der thermischen Schalteinrichtung Schnittstelle für eine uni- oder bidirektionale, drahtlose und/oder drahtgebundene Datenübertragung aufweisen, um die erfassten Daten und/oder abgeleiteten Informationen über den Zustand und/oder den Verschleiß auszutauschen.

Die thermische Schalteinrichtung kann vorteilhaft in einem Pulsbetrieb, vorzugsweise im Rahmen einer Pulsweitenmodulation, betrieben werden, wodurch die Leistung des Heizelements reduziert werden kann.

Ein weiterer Vorteil besteht darin, dass die thermische Schalteinrichtung mit einem einzigen Taster gesteuert und/oder programmiert werden kann. Dazu kann es zweckmäßig sein, dass durch eine bestimmte Betätigungsdauer und/oder Betätigungsanzahl des Tasters zwischen unterschiedlichen Funktionsweisen gewechselt werden kann, z. B. zwischen einem Programmier- und einem Bedienmodus.

Die vorliegende Erfindung betrifft des weiteren eine Heizeinrichtung zum Aufheizen von Flüssigkeiten, die einen Stromkreis umfasst, der eine, wie beschriebene, thermische Schalteinrichtung umfasst.

### Beschreibung der Erfindung anhand eines Ausführungsbeispiels

Ein zweckmäßiges Ausführungsbeispiel der vorliegenden Erfindung wird anhand von Zeichnungsfiguren nachstehend näher erläutert. Es zeigen:
- Fig. 1: eine Explosionsdarstellung des Ausführungsbeispiels einer thermischen Schalteinrichtung gemäß der vorliegenden Erfindung,
- Fig. 2: eine perspektivische Darstellung der thermischen Schalteinrichtung aus Fig. 1 unter Weglassung des Gehäuses, der Grundplatte sowie der Elektronik, sowie
- Fig. 3: eine vereinfachte Querschnittsdarstellung der thermischen Schalteinrichtung aus Fig. 1 mit geöffneter Kontaktstrecke mit einer Blickrichtung in Längsrichtung des Verlaufs der Kontakte.

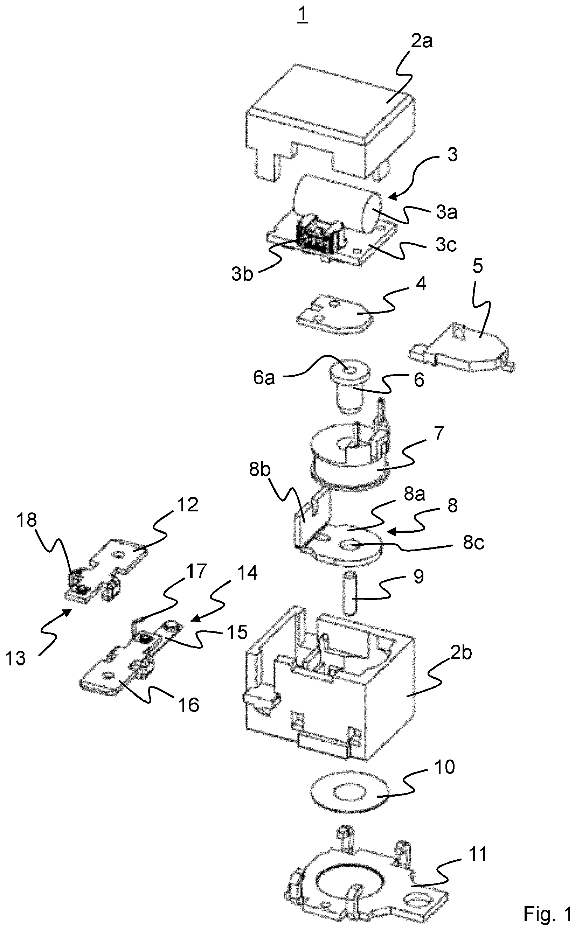

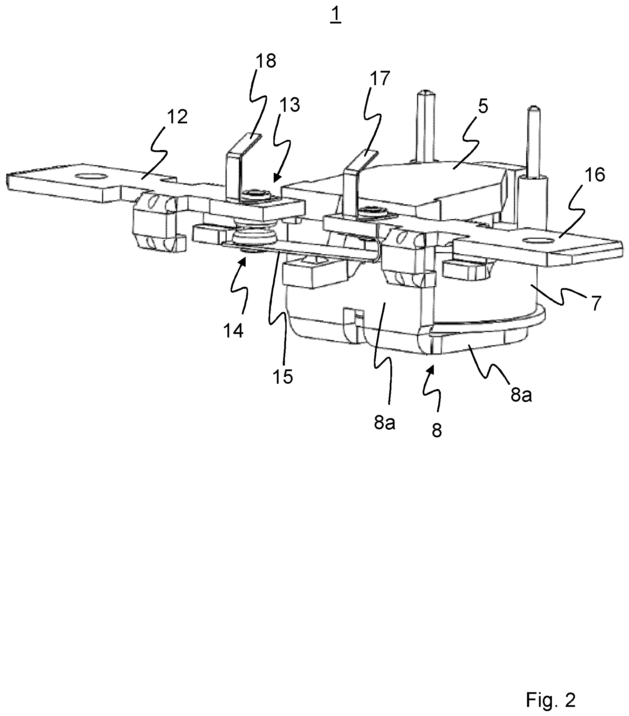

Die Bezugsziffer 1 in den Fig. 1, 2 und 3 bezeichnet die erfindungsgemäße thermischen Schalteinrichtung in ihrer Gesamtheit. Die thermische Schalteinrichtung 1 weist ein Gehäuse 2 auf, das aus zwei Gehäuseelementen 2a, 2b aufgebaut und an der Unterseite durch eine Grundplatte 11 verschlossen wird. Das Gehäuse 2 weist weiterhin Aussparungen auf, um die Steckanschlüsse 12, 16, welche jeweils mit den Kontakten 13, 14 elektrisch verbunden sind, aus dem Gehäuse 2 herauszuführen und den Anschluss der thermischen Schalteinrichtung 1 an einen (nicht dargestellten) Stromkreis einer zu sichernden und/oder zu regelnden und/oder zu steuernde Heizeinrichtung eines Gerätes zu ermöglichen. Bei dem Kontakt 13 handelt es sich um einen Festkontakt, bei dem Kontakt 14 um einen Bewegungskontakt. Die Steckanschlüsse 12, 16 können hierbei, wie in Fig. 1. dargestellt, geradlinig aus zwei gegenüberliegenden Seiten des Gehäuses 2 herausgeführt werden, rechtwinklig nach oben stehen, nebeneinander auf einer Gehäuseseite oder in irgendeiner anderen Form an die Geometrie der Anschlüsse des Stromkreises und/oder des Gehäuses 2 angepasst sein. Die Steckanschlüsse 12, 16 sind vorzugsweise als Flachkontakte ausgebildet mit einer vorzugsweise runden Aussparung, um eine vorteilhafte form- und/oder kraftschlüssige Steckverbindung oder eine Lötverbindung zu ermöglichen.

Gemäß der in Fig. 1 gezeigten Ausführungsform ist der Steckanschluss 16 mit dem Kontakt 14, der sich vorzugsweise an einer Schaltfeder 15 befindet, elektrisch verbunden. Der Steckanschluss 12 ist mit dem Kontakt 13 elektrisch verbunden. Der Kontakt 13 und der Kontakt 14 sind so angeordnet, dass diese eine Kontaktstrecke bilden, welche durch Bewegung des Kontaktes 14 geschlossen und geöffnet werden kann, sodass der (nicht dargestellte) Stromkreis der Heizeinrichtung geschlossen oder geöffnet werden kann.

Die die Unterseite des Gehäuses 2 verschließende, aus Metall oder einem anderen Material mit hoher Wärmeleitfähigkeit bestehende Grundplatte 11 ist vorzugsweise mit dem Gehäuseelement 2b verbunden. Diese Verbindung wird vorzugsweise durch Klammern an der Grundplatte 11, welche im Gehäuseelement 2b einhaken gebildet. Mittels der Grundplatte 11 kann die thermische Schalteinrichtung 1 direkt mit der zu überwachenden/schaltenden/regelnden Einrichtung, beispielsweise einer Heizeinrichtung, wie z. B. einem Mäander einer Dickschichtheizung, mechanisch und thermisch leitend verbunden werden, um die Temperatur des zu überwachenden/regelnden Elements auf ein temperatursensitives Element 10 zu übertragen. Die Befestigung der Grundplatte 11 kann beispielsweise durch eine Klebeverbindung, Klemmverbindung, Schraubverbindung, Lötverbindung und/oder dergleichen erzeugt werden. Dazu kann die Grundplatte 11 entsprechend der zu verwendenden Befestigungsmethode Bohrungen, Durchbrechungen, Innengewinde, Gewindestifte, Bolzen, Zapfen, Haken und/oder sonstige Befestigungsvorrichtungen aufweisen.

Des Weiteren kann die thermische Schalteinrichtung 1 ein elektromagnetisches Element aufweisen, welches gemäß der bevorzugten Ausführungsform nach Fig. 1 eine Spule 7, einen Spulenkern 6, ein Jochblech 8 und einen Anker 4 umfasst. Mit dem elektromagnetischen Element kann über ein elektrisches Signal ein Verbinden und Trennen der Kontakte 13 und 14 bewirkt werden. Hierzu wird die Bewegung des Ankers 4 durch ein Schaltelement 5 auf den Kontakt 14 (über die Schaltfeder 15) übertragen. Das elektromagnetische Element wirkt hierbei als elektromagnetischer Aktor. Alternativ oder zusätzlich kann mit dem elektromagnetischen Element festgestellt werden, ob die thermische Schalteinrichtung 1 geöffnet oder geschlossen ist. Das elektromagnetische Element wirkt hierbei als elektromagnetischer Sensor. Durch die variable Steurung der Kontakte mithilfe des elektromagnetische Elements kann die Schalteinrichtung vorteilhaft in einem Pulsbetrieb, vorzugsweise im Rahmen einer Pulsweitenmodulation, betrieben werden, wodurch die Leistung des Heizelements reduziert werden kann. Vorzugsweise kann die thermische Schalteinrichtung 1 mit einem einzigen Taster gesteuert und/oder programmiert werden.

Ferner kann die thermische Schalteinrichtung 1 einen temperatursensitiven Aktor aufweisen, der ein temperatursensitives Element 10, vorzugsweise eine Bimetallsprungscheibe und einen Übertragungselement 9 umfasst. Der temperatursensitive Aktor bewirkt ein Trennen der Kontakte 13 und 14 bei Überschreiten einer bestimmten Temperatur (Schalttemperatur), wobei dieser an demselben Schaltelement 5 wie das elektromagnetische Element wirkt. Hierbei ist diese temperatursensitive Schaltung der Schaltung durch den elektromagnetischen Aktor priorisiert (übergeordnet). Dies bedeutet, dass bei Schaltung durch den temperatursensitiven Aktor in jedem Fall eine Trennung der Kontakte 13 und 14 erfolgt, unabhängig vom Schaltzustand des elektromagnetischen Elements.

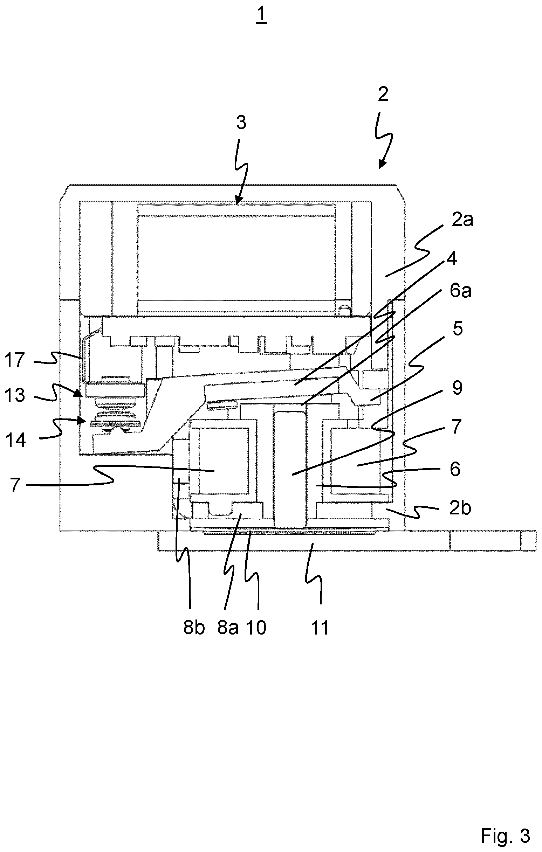

Vorzugsweise ist, wie aus Fig. 3 ersichtlich, das Schaltelement 5 als Hebel gestaltet, bei dem eine Bewegung des kontaktabgewandten Hebelarms ist Richtung des Spulenkerns 6 eine entgegengesetzte Bewegung des kontaktzugewandten Hebelarms bewirkt, sodass der Bewegungskontakt 14 über die Schaltfeder 15 in Richtung des Festkontaktes 13 geführt wird. Dazu kann das Jochblech 8 als Winkelstück mit einem horizontalen Wandstück und einem vertikalen Wandstück ausgebildet sein und das bewegliche Schaltelement 5 auf dem vertikalen Wandstück kippbar gelagert sein. Vorzugsweise wirkt auf den kontaktabgewandten Hebelarm des Schaltelements 5 das elektromagnetische Element und/oder der temperatursensitive Aktor. Das so erzeugte Drehmoment (bzw. die daraus resultierende Stellkraft) wird über den kontaktzugewandten Hebelarm (der vorzugsweise von unten an der Schaltfeder 15 des beweglichen Kontaktes anliegt) auf den beweglichen Kontakt übertragen. Die mechanische Kontaktstelle zwischen dem kontaktzugewandten Hebelarm und der Kontaktfeder kann in vorteilhafter Weise so ausgestaltet sein, das sich die beiden Elemente punktförmig berühren.

Ist die Spule 7 stromfrei, wird der Anker 4 nicht durch ein von der Spule 7 induziertes magnetisches Feld in Richtung des Spulenkerns 6 angezogen und über die Hebelanordnung durch die Schaltfeder 15 von der Spule 7 fern und damit offen gehalten. Bei Anlegen einer elektrischen Spannung wird ein magnetisches Feld induziert, wodurch der ferromagnetische Anker 4 zum Spulenkern 6 angezogen wird. Somit wirkt diese magnetische Kraft der Federkraft der Schaltfeder 15 entgegen, wodurch ein Schließen der Kontakte 13 und 14 bewirkt wird. Das auf das Schaltelement 5 durch die magnetische Kraft erzeugte Drehmoment muss größer als das durch die Federkraft der Schaltfeder 15 erzeugte Drehmoment (Stellkraft) sein. Ferner kann die vorliegende Ausführung folgende Besonderheiten aufweisen. Das Jochblech 8 und der Spulenkern 6 sind, wie aus Fig. 1 ersichtlich, so ausgeführt, dass je eine Durchgangsöffnung 6a, 8c das Durchführen eines Übertragungselements 9 des temperatursensitiven Aktors ermöglicht. Vorzugsweise sind die Durchgangsöffnungen 6a, 8c rund, können jedoch auch andere Formen aufweisen. Weiterhin ist die Durchgangsöffnung 6a vorzugweise zentral im Spulenkern 6 angeordnet.

Das Übertragungselement 9 des temperatursensitiven Aktors kann mit einem temperatursensitiven Element (der Bimetallsprungscheibe) in mechanischem Kontakt stehen. Unterhalb der Schalttemperatur befindet sich die Bimetallsprungscheibe in einem der beiden stabilen Zustände, wobei die Scheibe und das Übertragungselement 9 so dimensioniert sind, dass das Übertragungselement 9 bei geschlossenem Anker 4 nicht mit diesem in mechanischem Kontakt steht oder zumindest das Schließen des Ankers 4 respektive das Schließen der Kontakte 13 und 14 nicht verhindert. Bei Überschreiten der Schalttemperatur nimmt die Bimetallsprungscheibe den zweiten Zustand an und bewirkt durch deren Verformung (einer Wölbung in Richtung der Spule 7) eine Bewegung des Übertragungselements 9 in Richtung des Ankers 4 und des Schaltelements 5, wodurch der Anker 4 geöffnet und folglich (über das gemeinsame Schaltelements 5) der Kontakt geöffnet wird. Dadurch dass das Übertragungselement 9 vorzugsweise lediglich am Anker 4 anliegt, mit diesem jedoch nicht fest verbunden ist, kann dieses den Anker 4 nur öffnen (von der Spule 7 weg bewegen), jedoch nicht schließen (zur Spule 7 ziehen). Die Stellkraft die von der Bimetallsprungscheibe übertragen wird ist dabei so dimensioniert, dass diese auch bei anliegender Spannung an der Spule 7 und der damit vorhandenen, magnetischen Stellkraft den Anker 4 zu öffnen vermag. Die Stellkräfte hängen neben der Geometrie des Schaltelements 5, des elektromagnetischen Elements und des temperatursensitiven Elements auch von der am elektromagnetischen Element anliegenden Spannung ab. Durch zwei unterschiedliche Spannungen in der gleichen Anordnung kann damit bei der kleineren Spannung die Stellkraft des elektromagnetischen Elements kleiner als die Stellkraft des temperatursensitiven Elements sein, sodass dieses die Kontakte prioritär schaltet und bei der größeren Spannung kann die Stellkraft des elektromagnetischen Elements größer als die Stellkraft des temperatursensitiven Elements sein kann, sodass das elektromagnetische Element die Kontakte prioritär schaltet.

In vorteilhafter Weise kann das Übertragungselementes 9 aus einem ferromagnetischen Material bestehen, sodass über die Änderung der Induktivität des elektromagnetischen Elements die Schaltstellung des temperatursensitiven Aktors ermittelt werden kann. Das elektromagnetische Element und das Übertragungselement 9 können hierfür derart gestaltet sein, dass sich drei unterschiedliche Induktivitäten ergeben, und zwar insbesondere für: (a) geschlossenen Anker 4, (b) geöffneten Anker 4 und deaktivierten temperatursensitiven Element sowie (c) geöffneten Anker 4 und aktivierten temperatursensitiven Element. Damit können alle möglichen Schaltzustände eindeutig bestimmt werden.

Anstelle von oder zusätzlich zu der Verwendung einer Bimetallsprungscheibe, kann eine thermisch bedingte Abschaltung bei Überschreitung der Abschalttemperatur durch das elektromagnetische Element erfolgen. Hierbei wirkt das elektromagnetische Element gleichzeitig als temperatursensitiver Aktor. Dazu weist bzw. weisen der Anker 5 und/oder das Jochblech 8 und/oder der Spulenkern 6 ein ferromagnetisches Material auf, welches oberhalb der Abschalttemperatur (Curie-Temperatur) seine ferromagnetische Eigenschaft verliert, sodass die Wirkweise des elektromagnetischen Elements als elektromagnetischer Aktor oberhalb der Abschalttemperatur außer Kraft gesetzt wird, bzw. die Stellkraft des elektromagnetischen Elements zumindest soweit absinkt, dass diese geringer als die von der Schaltfeder 15 erzeugte Kraft wird, sodass die Schaltfeder 15 die Kontakte voneinander trennt. Die Curie-Temperatur liegt vorzugsweise in einem Temperaturbereich von 140 °C bis 150 °C.

Weiterhin kann die thermische Schalteinrichtung 1 eine Elektronik 3 aufweisen mit einer Platine 3c mit diskreten und/oder integrierten Bauelementen, wie einem Gleichrichter, einem Spannungswandler, vorzugweise einem Abwärtswandler, einem AD- und/oder DA-Wandler, einer uni- oder bidirektionale (kabelgebundene und/oder drahtlose) Schnittstelle 3b mit Anschlüssen 3c (für die kabelgebundene Kommunikation), Verbindungen zu den Kontakten 14 und 15, Verbindungen zur Spule 7, einem Mikrocontroller und/oder einem Akkumulator 3a. Die Elektronik 3 ist, vorzugsweise im oder am Gehäuse 2 positioniert, d. h. bauteilgebunden.

Die Elektronik 3 kann mit dem elektromagnetischen Element verbunden sein und es kommt ihr primär die Aufgabe zu, das elektromagnetische Element bei seiner Funktion als Aktor zu steuern und/oder zu regeln und/oder dessen Schaltzustand bei seiner Funktion als Sensor zu überwachen und/oder zu speichern. Weiterhin kann die Elektronik 3 für Regelungs-, Steuerungs-, Kontroll- und/oder Überwachungsaufgaben genutzt werden.

Die Kontakte 14 und 15 sind über vorzugsweise mit zwei Kontaktfedern 17, 18 oder eine andere elektrische Verbindung mit der Elektronik 3 verbunden, sodass die dort anliegenden Spannungen und folglich die an dem zu steuernden und/oder zu regelnden Stromkreis anliegenden Spannungen ebenfalls an der Elektronik 3 anliegen.

Die an der Steuerung anliegende Spannung des zu steuernden und/oder zu regelnden Stromkreises kann (vorzugsweise über eine Spannungswandlung, insbesondere über einen sog. Buck-Converter) genutzt werden, um die Versorgung der Elektronik 3 und den Steuerstrom bzw. Erfassungsstrom des elektromagnetischen Elements zu liefern.

Ferner kann die Elektronik 3 eine bidirektionale Schnittstelle 3c für die Verbindung weiterer Sensoren und/oder anderen Geräten und/oder Steuerungen aufweisen.

Durch in der Elektronik 3 integrierte oder mit dieser verbundene Temperatur- und/oder andere Umweltsensoren kann bei Bedarf eine vom thermischen Aktor bis zum Erreichen der Abschalttemperatur unabhängige Steuerung und/oder Regelung des Schaltzustanden mithilfe des elektromagnetischen Aktors bewirkt werden.

Durch die Integration von AD/DA-Wandlern in der Elektronik 3 kann die Spannung des zu regelnden Stromkreises erfasst und überwacht werden. Damit können weiterhin Schaltvorgänge und/oder Schaltzeiten erfasst, überwacht und/oder gespeichert werden. Weiterhin lassen sich über den Spannungsabfall und den zeitlichen Spannungsverlauf der Zustand respektive der Verschleiß der Schaltkontakte 13 und 14 ableiten. Hierzu können beispielsweise die ermittelten Istwerte analysiert und/oder mit, in einem Speicher der Elektronik 3 hinterlegten Sollwerten, verglichen werden.

### BEZUGSZEICHENLISTE

- 1: Schalteinrichtung
- 2: Gehäuse
- 2a.: Oberes Gehäuseelement
- 2b.: Unteres Gehäuseelement
- 3: Elektronik
- 3a.: Akkumulator
- 3b.: Schnittstelle
- 3c.: Platine
- 4: Anker
- 5: Schaltelement
- 6: Spulenkern
- 6a.: Durchgangsöffnung
- 7: Spule
- 8: Jochblech
- 8a.: horizontales Wandstück
- 8b.: vertikales Wandstück
- 8c.: Durchgangsöffnung
- 9: Übertragungselement
- 10: temperatursensitives Element
- 11: Grundplatte
- 12: Steckanschluss des feststehenden Kontaktes
- 13: Festkontakt
- 14: Bewegungskontakt
- 15: Schaltfeder
- 16: Steckanschluss des Bewegungskontaktes
- 17: Kontaktfeder des feststehenden Kontaktes
- 18: Kontaktfeder des Bewegungskontaktes

## Patentansprüche

1. Thermische Schalteinrichtung (1), insbesondere Temperaturregler, Temperaturbegrenzer oder Temperatursicherung, umfassend
ein Gehäuse (2),
einen ersten, vorzugweise fixen Kontakt (13),
einen zweiten, vorzugsweise beweglichen Kontakt (14),
einen temperatursensitiven Aktor, welcher dazu dient, beim Übersteigen einer bestimmten Temperatur den ersten (13) und den zweiten Kontakt (14) voneinander zu trennen,
**dadurch gekennzeichnet, dass**
ein elektromagnetisches Element vorgesehen ist, welches ebenfalls dazu dient, die Kontakte (13, 14) voneinander zu trennen und/oder miteinander zu verbinden und/oder die Kontaktstellung der Kontakte (13, 14) zu bestimmen.

2. Thermische Schalteinrichtung (1) nach Anspruch 1, **dadurch gekennzeichnet, dass** der temperatursensitive Aktor und das elektromagnetische Element unmittelbar gegenseitig aufeinander in der Art wirken, dass die beiden Kontakte (13, 14) voneinander getrennt oder verbunden werden.

3. Thermische Schalteinrichtung (1) nach einem der vorhergehenden Ansprüche, **dadurch gekennzeichnet, dass** der temperatursensitive Aktor gegenüber dem elektromagnetische Element in der Auslösung der Schaltfunktion priorisiert ist.

4. Thermische Schalteinrichtung (1) nach einem der vorhergehenden Ansprüche, **dadurch gekennzeichnet, dass** das elektromagnetische Element eine Spule (7) aufweist.

5. Thermische Schalteinrichtung (1) nach Anspruch 4, **dadurch gekennzeichnet, dass** das elektromagnetische Element einen Spulenkern (6), ein Jochblech (8) und/oder einen beweglichen Anker (4) aufweist.

6. Thermische Schalteinrichtung (1) nach einem der vorhergehenden Ansprüche, **dadurch gekennzeichnet, dass** der temperatursensitive Aktor und/oder das elektromagnetische Element gemeinsam auf ein bewegliches Schaltelement (5), das vorzugsweise nicht elektrisch leitfähig ist, wirken und in Abhängigkeit der Position des beweglichen Schaltelement (5) die Schaltstellung der Kontakte (13, 14) festgelegt wird.

7. Thermische Schalteinrichtung (1) nach Anspruch 5 oder 6, **dadurch gekennzeichnet, dass** das bewegliche Schaltelement (5) im Gehäuse (2) kippbar, vorzugsweise auf dem Jochblech (8) aufliegend kippbar, gelagert ist.

8. Thermische Schalteinrichtung (1) nach Anspruch 7, **dadurch gekennzeichnet, dass** das Jochblech (8) als Winkelstück mit einem horizontalen Wandstück (8a) und einem vertikalen Wandstück (8b) ausgebildet ist und das bewegliche Schaltelement (5) auf dem vertikalen Wandstück (8b) kippbar gelagert ist.

9. Thermische Schalteinrichtung (1) nach den Ansprüchen 6 bis 8, **dadurch gekennzeichnet, dass** das bewegliche Schaltelement (5) von unten an dem Kontakt (14) angreift.

10. Thermische Schalteinrichtung (1) nach einem der vorhergehenden Ansprüche, **dadurch gekennzeichnet, dass** der temperatursensitive Aktor ein temperatursensitives Element, vorzugsweise in Form einer bistabilen Bimetallsprungscheibe (10), aufweist, welches mit einem Übertragungselement (9) zusammenwirkt.

11. Thermische Schalteinrichtung (1) nach Anspruch 10, **dadurch gekennzeichnet, dass** der Spulenkern (6) sowie das Jochblech (8) je eine Durchgangsöffnung (6a, 8c) für das Übertragungselement (9) aufweisen.

12. Thermische Schalteinrichtung (1) nach einem der vorhergehenden Ansprüche, **dadurch gekennzeichnet, dass** das Übertragungselement (9) aus einem ferromagnetischen Material besteht.

13. Thermische Schalteinrichtung (1) nach einem der vorhergehenden Ansprüche, **dadurch gekennzeichnet, dass** die Kontakte (13, 14) mit der Elektronik (3) verbunden sind und/oder die Elektronik (3) im Gehäuse (2) integriert ist oder am Gehäuse (2) positioniert ist.

14. Thermische Schalteinrichtung (1) nach einem der vorhergehenden Ansprüche, **dadurch gekennzeichnet, dass** das elektromagnetische Element mit der Elektronik (3) elektrisch verbunden ist.

15. Thermische Schalteinrichtung (1) nach einem der vorhergehenden Ansprüche, **dadurch gekennzeichnet, dass** die Stromversorgung des elektromagnetisch angetriebenen Aktors und/oder der Elektronik (3) aus der an den Kontakten anliegenden Spannung abgeleitet wird.

16. Thermische Schalteinrichtung (1) nach einem der vorhergehenden Ansprüche, **dadurch gekennzeichnet, dass** an der Unterseite des Gehäuses (2) eine thermisch leitfähige Grundplatte (11) vorgesehen ist.

17. Thermische Schalteinrichtung (1) nach einem der vorhergehenden Ansprüche 5 bis 16, **dadurch gekennzeichnet, dass** der temperatursensitive Aktor dadurch realisiert wird, dass der Anker (5) und/oder das Jochblech (8) und/oder der Spulenkern (6) ein ferromagnetisches Material aufweisen bzw. aufweist, welches oberhalb einer vorgegebenen Schalttemperatur seine ferromagnetische Eigenschaft verliert.

18. Thermische Schalteinrichtung (1) nach einem der vorhergehenden Ansprüche, **dadurch gekennzeichnet, dass** die Elektronik (3):
einen Mikrocontroller, und/oder
ein Spannungswandler, insbesondere einen Buck-converter, und/oder
einen Akkumulator (3a) und/oder
einer Ladesteuerung; und/oder
einen Temperatursensor und/oder
einen Feuchtesensor und/oder
einen Bewegungssensor und/oder
einen AD/DA-Wandlern zur Überwachung und/oder Regelung und/oder Steuerung der Schaltungen des elektromagnetischen Aktors umfasst.

19. Thermische Schalteinrichtung (1) nach einem der vorhergehenden Ansprüche, **dadurch gekennzeichnet, dass** als Daten:
die Betriebsdauer der thermischen Schalteinrichtung, und/oder
die Dauer der Schaltzeiten, insbesondere Öffnungs- und/oder Schließzeiten, der Kontakte, und/oder
die Schließdauer und/oder Öffnungsdauer beim Schließen bzw. Öffnen der Kontakte, und/oder
die Anzahl der Schaltvorgänge der Kontakte und/oder die Zuordnung der Schaltvorgänge in Bezug auf die Auslösung durch den temperatursensitiven Aktor und/oder das elektromagnetische Element, und/oder
die an den Kontakten anliegende Spannung, und/oder
der Widerstand zwischen den Kontakten, und/oder der über die Kontakte fließenden Strom, und/oder der Zustand und/oder der Verschleiß der Kontakte, und/oder
der Zeitpunkt der Schaltvorgänge der Kontakte erfasst wird bzw. werden.

20. Thermische Schalteinrichtung (1) nach Anspruch 15, **dadurch gekennzeichnet, dass** erfasste Daten analysiert und/oder mit empirischen Daten verglichen werden.

21. Thermische Schalteinrichtung (1) nach einem der vorhergehenden Ansprüche, **dadurch gekennzeichnet, dass** die Elektronik (3) eine Schnittstelle 3b für eine uni- oder bidirektionale, drahtlose und/oder drahtgebundene Datenübertragung aufweist.

22. Thermische Schalteinrichtung (1) nach einem der vorhergehenden Ansprüche, **dadurch gekennzeichnet, dass** diese in einem Pulsbetrieb betreibbar ist.

23. Thermische Schalteinrichtung (1) nach einem der vorhergehenden Ansprüche, **dadurch gekennzeichnet, dass** die thermische Schalteinrichtung (1) mit einem einzigen Taster steuerbar und/oder programmierbar ist.

24. Heizeinrichtung zum Aufheizen von Flüssigkeiten umfassend einen Stromkreis **dadurch gekennzeichnet, dass** der Stromkreis eine thermische Schalteinrichtung gemäß einem der vorhergehenden Ansprüche umfasst.
